(19) Europäisches Patentamt
European Patent Office
Office européen des brevets

(11) **EP 4 530 486 A1**

(12) **EUROPEAN PATENT APPLICATION**

(43) Date of publication:
**02.04.2025 Bulletin 2025/14**

(21) Application number: **23200673.4**

(22) Date of filing: **28.09.2023**

(51) International Patent Classification (IPC):
**F16B 25/00** (2006.01)  **F16B 25/10** (2006.01)

(52) Cooperative Patent Classification (CPC):
**F16B 25/0015; F16B 25/0052; F16B 25/0063;**
**F16B 25/0068; F16B 25/0084**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Hsu, Ming-Hao**
**Tainan City 710 (TW)**

(72) Inventor: **Hsu, Ming-Hao**
**Tainan City 710 (TW)**

(74) Representative: **Jannig & Repkow**
**Patentanwälte PartG mbB**
**Klausenberg 20**
**86199 Augsburg (DE)**

(54) **SCREW**

(57)     A screw (10) includes a shank (12), a locking thread (18), and an interference thread (24). The shank (12) includes a screwing-in portion (14), a head (16), and a straight rod portion (17) between the screwing-in portion (14) and the head (16). The locking thread (18) is arranged on the outer peripheral surface of the shank (12) and extends to the straight rod portion (17) from the screwing-in portion (14). The locking thread (18) includes a plurality of locking thread convolutions (20). The straight rod portion (17) is provided with a plurality of ribs (28). The interference thread (24) spirally arranged at the screwing-in portion (14) extends to a lower section (27) of the straight rod portion (17) and includes a plurality of interfering thread convolutions (26). Each interfering thread convolution (26) is formed between two adjacent locking thread convolutions (20). The lead angles and the ridge heights of the beveled rib (28), the locking thread convolution (20) and the interference thread convolution (26) are related to one another in a specific relationship range.

FIG.1

EP 4 530 486 A1

**Description**

BACKGROUND OF THE INVENTION

1. Field of the Invention

The present invention relates to a screw and, more particularly, to a screw which is applicable for wooden workpieces, building materials or similar workpieces.

2. Description of the Related Art

A conventional screw with a screwing-in end is used to connect wooden workpieces, and the screw includes a shank and at least one locking thread surrounding the shank so that the screw can be rotatably screwed into the wooden workpieces to be connected. During the fastening process, the locking thread of the screw is screwed into the wooden workpieces by applying an external torque. Since the wooden workpieces are made of interlaced fiber materials, the fastening process relies entirely on the locking thread to cut the fiber materials and screw into the wooden workpieces. The lead angle of the locking thread determines the process of locking into the workpieces. In case the locking thread is not sharp due to manufacturing problems, the cutting effect of the locking thread will be negatively affected, resulting in that the fiber material cannot be effectively cut, and the incompletely broken wood fibers will wrap around the shank. Therefore, a user has to exert a forceful screwing-in torque to screw the shank into the workpieces smoothly, causing inconvenience in operation. Further to aforesaid description, because the locking thread could not complete cutting effectively and the wood fibers would wrap around the shank resulting in massive driving resistance, the tightening torque applied to the screw would be excessive. When the screw cannot withstand the excessive tightening torque, the shank or the thread will be damaged and broken in the screwing process, hence the user has to remove the damaged screw and re-screw another screw, causing inconvenience in operation. To avoid screw breakage caused by excessive torque applied due to the fiber winding on the shank, a common practice is setting multiple beveled ribs on the shank or on the crests of the thread to cut and guide the chips of the wooden workpiece. Clearly speaking, when the locking thread of the screw is screwed into the workpieces, the multiple beveled ribs cut the wooden workpieces to ream the hole, thus producing the chips (wooden chips), and the chips are guided by two sides of a respective one beveled rib so that the screw is less prone to fiber entanglement and obstruction by the chips during the screwing process, and the locked workpiece is less likely to break. However, the beveled ribs extend longitudinally along the shank of the screw and intersect with the thread of the screw. When the screw is screwed in, the respective one beveled rib contacts with the workpiece, which will cut the wooden workpiece and generate a lot of chips. When the chips accumulate in the intersected space between the beveled ribs and the thread, the chips cannot be removed smoothly and cover the shank, which will cause insufficient cutting function of the oblique rib and may cause the screw to get stuck or the ridge height will be reduced due to the shank being covered by the accumulated chips, resulting in a decrease in the screw-in traction force and the screw idling. Similarly, the beveled ribs are formed on the shank of the screw to cut the wooden workpiece. If the ridge height and the lead angle of the beveled rib are not appropriate, a shaking of the beveled rib will occur in the cutting process of the wooden workpiece due to an excessive radial reaction force of the wooden workpiece on the screw, it is easy to over-ream the hole, thus negatively influencing an engagement force.

Furthermore, In order to enable the screw to fasten with the workpiece quickly, the pitch of modern wood screws is biased to be set higher than conventional standard wood screws. However, due to the larger lead angle of the thread, the shaking of the screw during screwing into the workpiece will be more obvious, thus causing unstable operation for the operator. Especially when the screw must be locked into the workpiece at a specific angle (such as 45°), it is quite easy to cause offset between the actual locking direction of the screw and the expected locking direction, hence the locked workpiece will not be able to achieve the best engagement.

The present invention has arisen to mitigate and/or obviate the afore-described disadvantages.

BRIEF SUMMARY OF THE INVENTION

The primary aspect of the present invention is to provide a screw which is capable of being screwed into a fibrous workpiece (such as a wooden workpiece) smoothly and stably along a specific locking direction. Even though the shank is provided with multiple beveled ribs with a cutting function, the screw of the present invention is capable of offsetting the reaction force of the workpiece to the screw when the beveled rib cut the wooded workpiece and is capable of reducing fibrous twining to twist off the screw in the fastening process, thus obtaining stable screwing operation. Furthermore, the screw has segmented cutting during the process of screwing into the workpiece, and the chips generated by the cutting can be removed effectively, thus avoiding accumulation of the chips in an intersected space between the beveled ribs and the locking thread to reduce the screwing torque and enhance effective locking.

To obtain above-mentioned aspect, a screw of the present invention includes a shank, a locking thread, and an interference thread. The shank includes a conical screwing-in portion, a head, and a straight rod portion defined between the screwing-in portion and the head. The head is spaced from the screwing-in portion along a longitudinal axis of the shank, and the straight rod portion has a lower segment adjacent to the screwing-in portion. The locking thread is helically formed around an outer peripheral surface of the shank and extends from the screwing-in portion to the straight rod portion. The locking thread includes multiple locking thread convolutions, and a pitch is defined between any two adjacent locking thread convolutions. The interference thread is helically formed around the screwing-in portion of the shank and extends to the lower segment of the straight rod portion. The interference thread includes multiple interfering thread convolutions each located between two adjacent locking thread convolutions, and a length of the interference thread extending along the longitudinal axis of the shank is at least greater than or equal to 1.5 times of the pitch.

In an embodiment, the screw further includes multiple beveled ribs helically arranged on an outer circumference of the straight rod portion and spaced from the interference thread by at least one pitch. The multiple beveled ribs are configured to cut the workpiece made of fibrous material and to guide the chips. The beveled rib has a ridge height (h1) and a lead angle (ø1). Depending on whether the screw is a full thread or a half thread, the locking thread can either extend fully under the head, or a certain distance away from the head, leaving a certain length of unthreaded shank. The locking thread has a ridge height (h2) and a lead angle (ø2). The interference thread has a ridge height (h3) and a lead angle (ø3). Overall speaking, when exerting an external torque, the locking stability of the screw will be dominated by the one with a largest total axial force produced by the locking thread, interference thread and oblique convex ribs; and the overall cutting performance will be dominated by the one with a greater total radial force produced by the locking thread, interference thread and oblique convex ribs. In other words, when the largest total axial force is greater than the largest total radial force, the screw tends to lock the workpiece, and when the largest total radial force is greater than the largest total axial force, the screw tends to cut the workpiece. Since the interference thread is only provided at a certain distance L along the longitudinal axis of the shank from the screwing-in portion to the lower segment of the straight rod portion, the total axial force and total radial force that can be generated by the interference thread will not be too immense. Therefore, the largest total axial force of the screw will be dominated by the locking thread, and the largest total radial force will be dominated by the oblique convex ribs. The addition of the interference thread is to simultaneously interfere with the force vector of the axial and radial force components of the locking thread and the oblique convex ribs, thereby combining the stable output process of locking and cutting during the entire driving process.

Conventional wood screws are only considered to provide cutting units (such as straight/beveled ribs) on the shank in addition to the locking thread, which are used to ream holes in wooden workpieces to avoid fiber twining. However, the locking thread and the beveled ribs are used to lock and cut the wooden workpiece respectively. If the performance of cutting is greater than that of locking, the workpieces will actually be loose when they are fastened by the screw. It can be verified by the pull-out test that excessive cutting and damage make the screw being easily pulled out by the external force, thus causing the failure of locking the workpieces. On the contrary, if the performance of cutting damage is not obvious enough or the cutting ability is slowly lost due to the accumulation of chips, the fiber will not be effectively cut and the shank will be continuously twined by the fibers, eventually causing the screw to be twisted off or the workpieces to be broken. The interference thread is to not only assist the fastening function of the locking thread, but also improve the cutting performance of the beveled rib. In addition to the fact that the axial force is related to the ridge height, lead angle, size and tooth-shaped geometry of the screw, since the screw outputs force to the workpiece in a dynamic state of motion during the fastening process, it is also necessary to take into account the coefficient of kinetic friction on the surface of the screw in contact with the workpiece. Therefore, there is the following relationship among the beveled rib, the locking thread and the interference thread.

$$K * h2 \leq h1 \leq K * h2 + \frac{0.5 * h2}{exp^{K^2 * arctan(\theta 2)^{\Gamma} * \pi * D}}$$

$$D * K^2 * h2 \leq h3 \leq \frac{2\pi D * K^3 * h2}{exp^{(K^2 * arctan(\theta 2)^{\Gamma} * D)}}$$

$$\frac{10K * \theta 2}{(ln(K))^2} \leq \theta 1 \leq \frac{100K * \theta 2 * arctan(90 - \theta 2)^{\Gamma}}{ln[(\theta 2^3 * K^2)/h2]}$$

$$ln[(\frac{\theta2 - \frac{\theta2}{10K*(ln(K))^2}}{0.5DK}))] \le \theta3 \le 10*arctan(90-\theta2)^r*ln[(\frac{\theta2 - \frac{\theta2}{10K*(ln(K))^2}}{0.5DK}))]$$

wherein D is a nominal diameter of the screw, $(\o)^r$ is an angle conversion radian, and K is a coefficient of kinetic friction between a surface of the screw and a surface of a locked workpiece.

Since the chips continue to be produced when screwing the screw into the wooden workpiece, a portion of the chips covers the screw to cause the coefficient of kinetic friction between the screw and the wooden workpiece is within wood-wood (0.3) and metal-wood (0.2).

Based on the fact that the interference thread of the present invention is formed on the conical screwing-in portion and extends toward the head to the lower segment of the straight rod portion for a certain distance (L), and the interference thread has an appropriate ridge height (h3) and a lead angle (ø3), a sum of the axial component forces generated by the interference thread cannot only buffer the shaking caused by the locking thread cutting into the workpiece due to the large pitch setting, but also the reaction force borne by the beveled ribs to cut the workpiece can be offset by the interference thread, thus obtaining a stable and non-shaking operation during the process of screwing into the workpiece. Furthermore, the radial component force generated by the interference thread can pre-press the wood fibers outward and cut out a matching space, which can make the beveled ribs connected on the straight rod portion cut the wooden workpieces more effectively. Thus, the chips are scattered smoothly and are not accumulated in the intersected space between the beveled ribs and the interference thread. Therefore, it is possible to prevent the screw from being seized due to insufficient cutting function of the beveled ribs, and it is also possible to avoid an idle rotation of the screw caused by a decrease in screw-in traction force due to the reduction in the ridge height caused by the shank being covered by chips accumulation on the shank.

Table 1

For further explanation, the Table 1 shows a relationship among upper limits of ridge heights for the beveled rib, the locking thread, and the interference thread, when they are in difference nominal diameters D. As shown in Table 1, when the nominal diameter of the screw is larger, the ridge height (h3) of the interference thread can even exceed the ridge height (h1) of the beveled rib and the ridge height (h2) of the locking thread. The larger the value of (h3), the more obvious the interference of the interference thread is, such that additional component force is provided to assist the screw with a large size to be screwed into the workpiece when the locking screw and the beveled ribs are subjected to greater resistance during the tapping or cutting process, thus obtaining stable screwing of the screw. Since the interference thread is formed on the conical screwing-in portion and extends for a certain distance toward the head to the lower segment of the straight rod portion, the interference thread can early cut/tap the workpiece and cause an obvious mating space, so the chips are removed and scattered effectively when the beveled ribs cut the wooden workpieces.

Table 2

When the beveled rib, the locking thread, and the interference thread are in different nominal diameters D, a relationship of upper limits of lead angles of the beveled rib, the locking thread, and the interference thread is shown in Table 2. When the size of the screw used is larger, the upper limit of the lead angle (ø1) of the beveled rib will tend to be set at a larger angle so as to obtain better cutting performance of the beveled rib. However, the upper limit of the lead angle (ø3) of the interference thread and the upper limit of the lead angle (ø1) of the beveled rib presents a setting trend in the opposite direction. Even if shaking happen when operating the screw due to the large pitch relationship of the locking thread or the reaction force absorbed by the beveled rib in the cutting process, the more the lead angle (ø3) of the interference thread deviates from the lead angle (ø1) of the beveled rib, the more the interference effect can be engaged. The reaction force is thus offset to assist the screw to be screwed into the wooden workpiece stably.

As shown in Table 1 and Table 2, regardless of the relationship between the ridge height and lead angle of the locking thread, the interference thread, and the beveled rib, it is seen that the interference thread is simultaneously affected by the parameters of the locking thread and the beveled rib to achieve interference purpose.

In another embodiment, at least one locking thread convolution proximate to the screwing-in portion is provided with multiple cutting teeth. At least one interfering thread convolution is provided with multiple cutting teeth.

In another embodiment, the locking thread convolutions on the straight rod portion are provided with multiple cutouts therein.

In another embodiment, a notch is provided above a tip of the screwing-in portion and on the straight rod portion.

BRIEF DESCRIPTION OF THE DRAWINGS

FIG. 1 is a perspective view of a screw according to an embodiment of the present invention.
FIG. 2 is a partial, enlarged view of the screw of FIG. 1.
FIG. 3 is a longitudinal cross-sectional view of the screw of FIG. 1.
FIG. 4a is a cross sectional view taken along the line 4-4 of FIG. 1.
FIG. 4b is a cross sectional view similar to FIG. 4a, wherein two sides of the beveled rib are asymmetric.
FIG. 5 is a cross sectional view taken along the line 5-5 of FIG. 1.
FIG. 6 is a partial, enlarged view of a screw according to another embodiment of the present invention.
FIG. 7a is a schematic view showing a shape of a cross section of a cutting tooth of FIG. 6.
FIG. 7b is a schematic view showing another shape of the cross section of the cutting tooth of FIG. 6.
FIG. 7c is a schematic view showing yet another shape of the cross section of the cutting tooth of FIG. 6.

DETAILED DESCRIPTION OF THE INVENTION

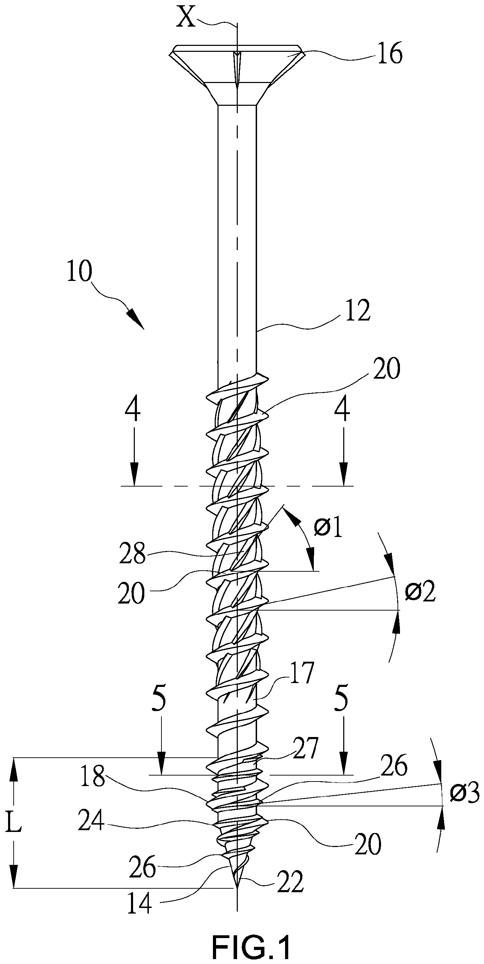

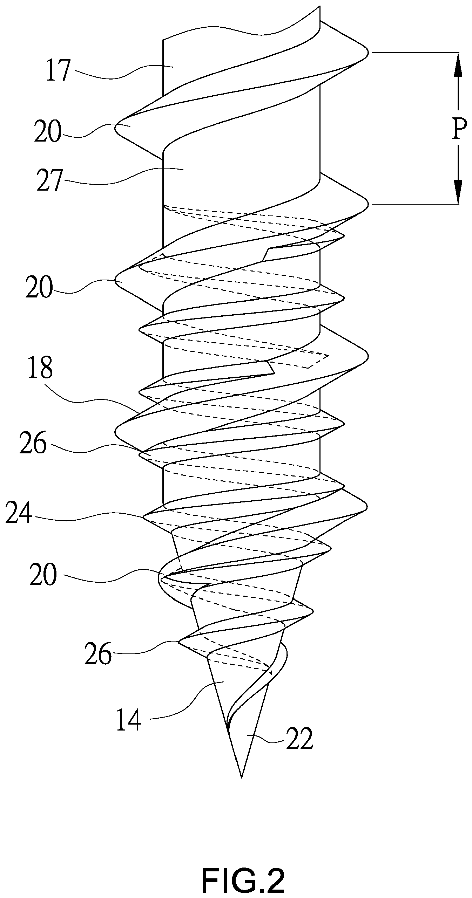

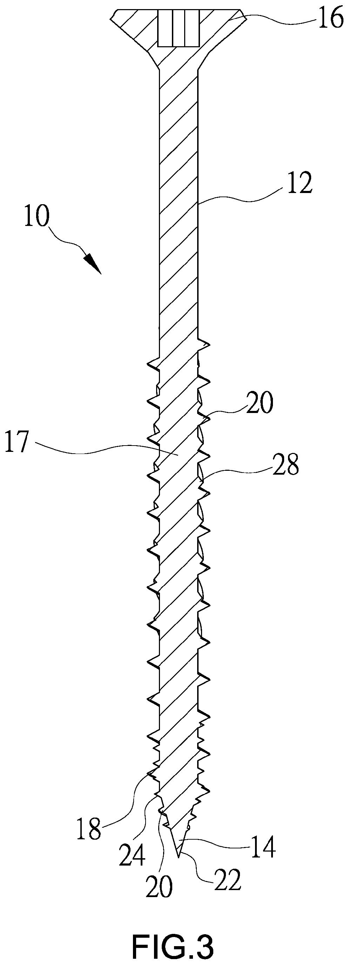

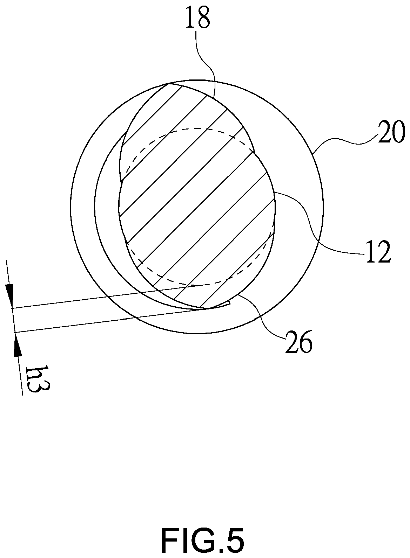

With reference to FIGS. 1 through 5, a screw 10 according to the present invention includes a shank 12 having a conical screwing-in portion 14, a head 16 spaced from the screwing-in portion 20 along a longitudinal axis (X) of the shank 12, and a straight rod portion 17 between the screwing-in portion 14 and the head 16. The screwing-in portion 14 has a conically-pointed cross section. The straight rod portion 17 includes a lower segment 27 adjacent to the screwing-in portion 14. In this embodiment, the lower segment 27 has the same shank diameter as the straight rod portion 17. However, the shank diameter of the lower segment 27 can also be selected to be 0.6-0.9 times the shank diameter of the straight rod portion 17. The screw 10 further includes a locking thread 18 helically formed on an outer peripheral surface of the shank 12. The locking thread 18 includes multiple locking thread convolutions 20 extending from a tip 22 of the screwing-in portion 14 to the straight rod portion 17. A pitch (P) is defined between any two adjacent locking thread convolutions 20, and the locking thread convolution 20 has a ridge height (h2) and a lead angle (ø2).

The screw 10 further includes an interference thread 24 helically formed around the shank 12 and including at least one interfering thread convolution 26. In this embodiment, the interference thread 24 includes multiple successive interfering thread convolutions 26 extending from the screwing-in portion 14 to the lower segment 27 of the straight rod portion 17. A length L of the interference thread 24 extending along the longitudinal axis X of the shank 12 is at least greater than or equal to 1.5 times of the pitch (P), and the interfering thread convolution 26 has a ridge height (h3) and a lead angle (ø3).

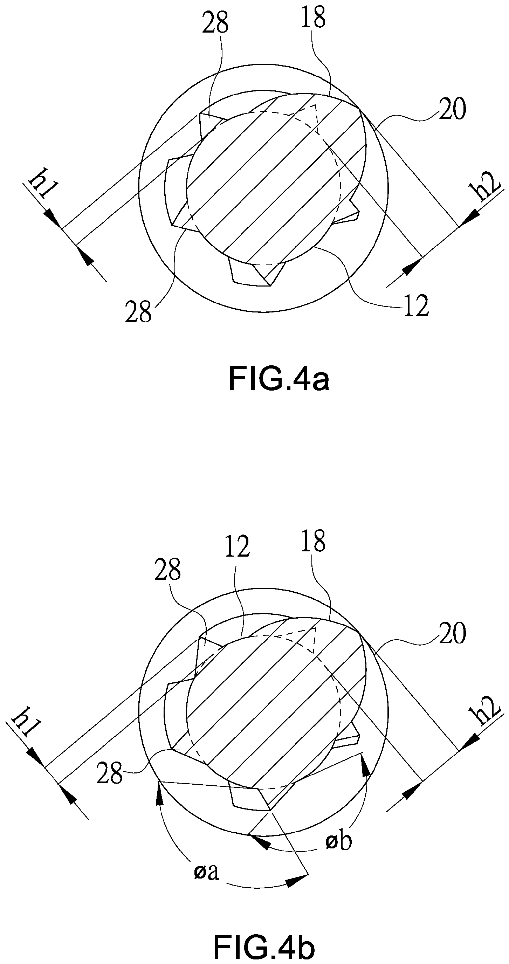

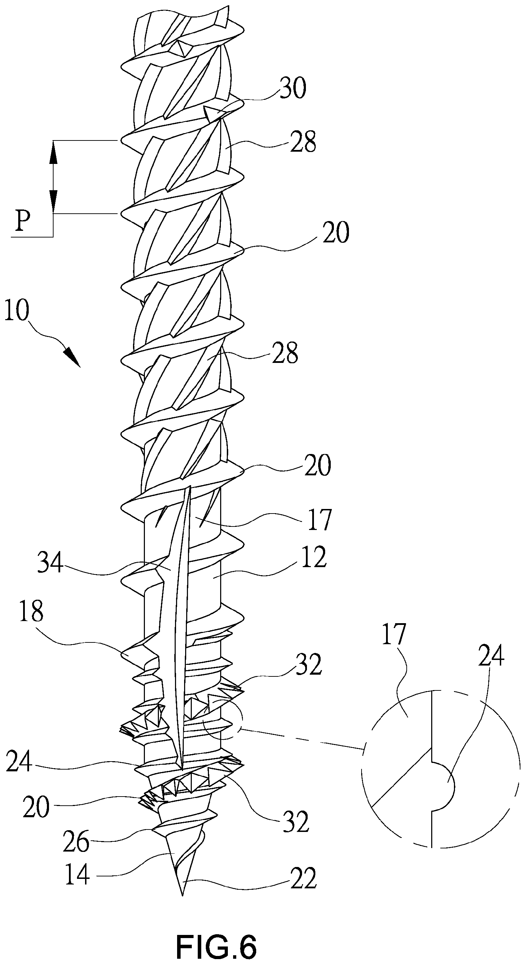

The screw 10 further includes multiple beveled ribs 28 helically arranged on an outer circumference of the straight rod portion 17 and spaced from the interference thread 24 by at least one pitch P. In this embodiment, the multiple beveled ribs 28 are formed on a tooth bottom between any two adjacent locking thread convolutions 20 of the locking thread 18 to cut and guide chips of a workpiece. The beveled rib 28 has a ridge height (h1) and a lead angle (ø1). In this embodiment, a cross section (a shape connected by two sides and the tooth bottom) of the beveled rib 28 is triangular, as shown in FIG. 4a. However, the cross section of the beveled rib 28 can be formed in any one of quadrangle, arc, and other asymmetric geometric shapes. It is to be noted that the two sides of the beveled rib 28 affects the angle between each side and the shank of the adjacent tooth bottom depending on whether the cross-sectional shape is symmetrical, asymmetrical or curved (for example, an angle $ø_a$ is different from an angle $ø_b$, as illustrated in FIG. 4b). One side of the beveled rib 28 facing a screwing direction is related to a cutting performance and a chip removal, and the other side of the beveled rib 28 away from the screwing direction is related to a resistant torque of unscrewing the screw 10. The cutting, chip removal and unscrewing resistance of the beveled rib 28 shown in this embodiment have different performances due to the different cross-sectional shapes, but it is not limited by this embodiment. Moreover, a shape of the thread ridge of the interfering thread convolution 26 is not limited by a triangle shape, for example, the thread ridge of the interfering thread convolution 26 can be formed in an arc shape or a circular angle shape (for instance, the thread ridge of the interfering thread convolution 26 is in the circular angle shape as illustrated in FIG. 6).

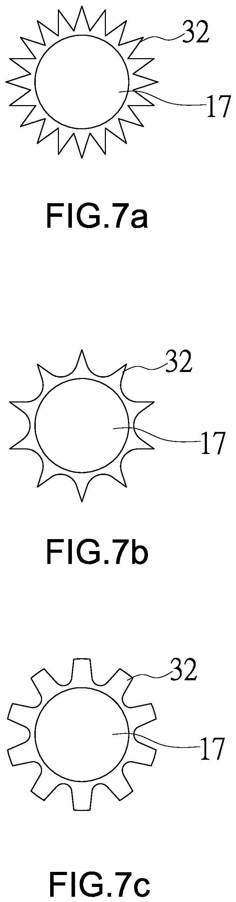

Referring to FIG. 6, in another embodiment, the locking thread convolutions 20 having the beveled ribs 28 are provided with multiple cutouts 30 therein, and the cutout 30 is configured to upward remove the chips guided by the beveled ribs 28 and has a tilted lead angle, such that the chips are not accumulated between any two adjacent locking thread convolutions 20, and the screw 10 is not stopped/blocked by the chips. In addition, at least one locking thread convolution 20 proximate to the screwing-in portion 14 has multiple cutting teeth 32 to enhance a cutting force of the locking thread 18. However, it is also applicable if cutting teeth 32 are provided on at least one interfering thread convolution 26 at the same time. A shape of the cutting tooth 32 is not limited to form in a triangular recess shape, for example, the shape of the cutting tooth 32 is formed in an arcuate recess shape or a rounded concave shape (as shown in FIGS. 7a, 7b, and 7c). Furthermore, a concave notch 34 is provided on the tip 22 of the screwing-in portion 14 and the straight rod portion 17 (as shown in FIG. 6), such that when the cutting tooth 32 and the interference thread 24 on the screwing-in portion 14 are screwed into the workpiece, the chips can be stored in the notch 34, thus achieving stable and smooth screwing operation.

In operation of the screw 10 of the present invention, the tip 22 of the screwing-in portion 14 is inserted into the fibrous workpiece (such as a wooden workpiece), then the locking thread convolutions 20 and the interference thread 24 of the screwing-in portion 14 are screwed into the workpiece. When the locking thread 18 and the interference thread 24 are rotated simultaneously, since there is a specific difference relationship in the ridge heights (the distance between the crest and the root of the thread, normal to the longitudinal axis X) and lead angles of the locking thread 18 and the interference thread 24, the screw 10 is mainly driven by an axial component force produced by the locking thread 18 and moved into the workpiece in a fixed lead travel based on the lead angle ø2, with the axial component force produced by the interference thread 24 auxiliarily facilitating the engaging and pulling action of the locking thread 18, and with the cutting teeth 32 on the locking thread convolutions 20 cutting the workpiece. Furthermore, the concave notches 34 in the tip 22 of the screwing-in portion 14 and the straight rod portion 17 can store the chips produced by screwing the cutting teeth 32 of the screwing-in portion 14 and the interference thread 24 into the workpiece, thus obtaining stable and smooth screwing operation to save operational force and to prevent the shank 12 from being entangled by the chips, which will negatively affect the screwing speed and driving resistance. Also, the chips producing in the screwing operation do not press one another to break the workpiece. Thereafter, when the beveled ribs 28 of the straight rod portion 17 contacts with the wooden workpiece in the beginning, the workpiece is cut by a radial component force of the respective one beveled rib 28. In addition, because the ridge height and lead angle of the interference thread 24 also has a specific difference relationship with the ridge height and lead angle of the oblique convex rib 28, an reaction force received by the screw 10 is offset by the axial component force of the interference thread 24 when the beveled ribs 28 cut the workpiece, and since a mating space is formed after fibers of the wood are pressed outward in advance by the radial component force of the interfering thread convolutions 26, the chips are crushed finely by the beveled rib 28 again to be scattered more evenly. Furthermore, the chips are removed upward from the cutouts 30 after being guided by the two sides of the beveled ribs 28, hence the chips are not accumulated in the intersected space between the beveled ribs 28 and the locking thread 18 to cover the shank 12, thus, the screw 10 can be smoothly introduced into the workpieces.

Thereby, the screw 10 of the present invention has advantages as follows:

1. When the lead angles and the ridge heights of the beveled rib 28, the locking thread 18 and the interference thread 24 are related to one another in a specific relationship range, the component force generated by the screw 10 on the workpieces by exerting the external torque to the screw 10 achieves the most suitable comprehensive performance. Because the interfering thread 24 interferes with the output of the other two different component forces simultaneously, it not only assists the locking thread 18 to engage and pull the workpieces, but also improves the cutting performance of the beveled ribs 28, such that the screw 10 can be screwed into the workpiece stably. Although the traditional wood screw is provided with the locking thread and beveled ribs, excessive locking or excessive cutting will cause the workpieces not to achieve an effective fixing state, and it may also cause damage to the screw or a reduction in the anti-pullout resistance of the screw. This is because the comprehensive effect of the matching together between the locking thread and beveled ribs has not been considered. Preferably, the screw 10 of the present invention adds the interference thread 24, because the ridge height (h3) and lead angle (ø3) of the interference thread 24 interfere with the parameter changes of the other two at the same time, so the locking thread 18 and the beveled ribs 28 can play a greater role when being matched.

2. The multiple cutting teeth 32 on the locking thread convolutions 20 or on both the locking thread convolution 20 and the interfering thread convolution 26 of the screwing-in portion 14 can enhance the cutting force of the screwing-in portion 14 of the screw 10. In addition, the notch 34 provided above the tip 22 of the screwing-in portion 14 and on the straight rod portion 17 can store the chips produced by screwing the cutting teeth 32 of the screwing-in portion 14 and the interference thread 24 into the workpieces, thus obtaining stable and smooth screwing process.

3. The locking thread convolutions 20 on the straight rod portion 17 is assisted by the beveled ribs 28 to cut the workpieces, and the chips produced by cutting the workpieces are guided by the two sides of each beveled rib 28 and are removed upward from the multiple cutouts 30 of the locking thread convolutions 20 to reduce the resistance in the screwing direction, thus operating the screw 10 easily.

While the first embodiments of the invention have been set forth for the purpose of disclosure, modifications of the disclosed embodiments of the invention as well as other embodiments thereof may occur to those skilled in the art. The scope of the claims should not be limited by the first embodiments set forth in the examples, but should be given the broadest interpretation consistent with the description as a whole.

## Claims

1. A screw (10) comprising:

   a shank (12) including a conical screwing-in portion (14), a head (16), and a straight rod portion (17) defined between the screwing-in portion (14) and the head (16), wherein the head (16) is spaced from the screwing-in portion (14) along a longitudinal axis (X) of the shank (12), and the straight rod portion (17) has a lower segment (27) adjacent to the screwing-in portion (14);
   a locking thread (18) helically formed around an outer peripheral surface of the shank (12) and extending from the screwing-in portion (14) to the straight rod portion (17), wherein the locking thread (18) includes multiple locking thread convolutions (20), and a pitch (P) is defined between any two adjacent locking thread convolutions (20); and
   an interference thread (24) helically formed around the screwing-in portion (14) of the shank (12) and extending to the lower segment (27) of the straight rod portion (17), wherein the interference thread (24) includes multiple interfering thread convolutions (26) each located between two adjacent locking thread convolutions (20), and a length (L) of the interference thread (24) extending along the longitudinal axis (X) of the shank (12) is at least greater than or equal to 1.5 times of the pitch (P).

2. The screw (10) as claimed in claim 1 further comprising multiple beveled ribs (28) helically arranged on an outer circumference of the straight rod portion (17) and spaced from the interference thread (24) by at least one pitch (P).

3. The screw (10) as claimed in claim 2, wherein the beveled rib (28) has a first ridge height (h1) and a first lead angle (ø1), the locking thread convolution (20) has a second ridge height (h2) and a second lead angle (ø2), and the interfering thread convolution (26) has a third ridge height (h3) and a third lead angle (ø3), wherein a relationship among the beveled rib (28), the locking thread convolution (20), and the interfering thread convolution (26) is:

$$K * h2 \leq h1 \leq K * h2 + \frac{0.5 * h2}{exp^{K^2 * arctan(\theta 2)^r * \pi * D}}$$

$$D * K^2 * h2 \leq h3 \leq \frac{2\pi D * K^3 * h2}{exp^{(K^2 * arctan(\theta 2)^r * D)}}$$

$$\frac{10K * \theta 2}{(ln(K))^2} \leq \theta 1 \leq \frac{100K * \theta 2 * arctan(90 - \theta 2)^r}{ln[(\theta 2^3 * K^2)/h2]}$$

$$ln[(\frac{\theta 2 - \frac{\theta 2}{10K*(ln(K))^2}}{0.5DK}))] \leq \theta 3 \leq 10 * arctan(90 - \theta 2)^r * ln[(\frac{\theta 2 - \frac{\theta 2}{10K*(ln(K))^2}}{0.5DK}))]$$

wherein D is a nominal diameter of the screw, (ø)$^r$ is an angle conversion radian, and K is a coefficient of kinetic friction between a screw material surface and a workpiece material surface.

4. The screw (10) as claimed in claim 2, wherein at least one locking thread convolution (20) proximate to the screwing-in portion (14) is provided with multiple cutting teeth (32).

5. The screw (10) as claimed in claim 3, wherein at least one locking thread convolution (20) proximate to the screwing-in portion (14) is provided with multiple cutting teeth (32).

6. The screw (10) as claimed in claim 2, wherein the locking thread convolutions (20) on the straight rod portion (17) are provided with multiple cutouts (30) therein.

7. The screw (10) as claimed in claim 3, wherein the locking thread convolutions (20) on the straight rod portion (17) are provided with multiple cutouts (30) therein.

8. The screw (10) as claimed in claim 2, wherein a notch (34) is provided above a tip (22) of the screwing-in portion (14) and on the straight rod portion (17).

9. The screw (10) as claimed in claim 3, wherein a notch (34) is provided above a tip (22) of the screwing-in portion (14) and on the straight rod portion (17).

10. The screw (10) as claimed in claim 2, wherein at least one interfering thread convolution (26) is provided with multiple cutting teeth (32).

FIG.1

FIG.2

FIG.3

FIG.4a

FIG.4b

18

20

12

26

h3

FIG.5

FIG.6

FIG.7a

FIG.7b

FIG.7c

Europäisches
Patentamt

European
Patent Office

Office européen
des brevets

# EUROPEAN SEARCH REPORT

**Application Number**

**EP 23 20 0673**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2006 308079 A (SUN WAVE IND; TECHNO ASSOCIE CO LTD; KOKUBU & CO LTD) 9 November 2006 (2006-11-09) | 1-3,8,9 | INV. F16B25/00 F16B25/10 |
| Y | * paragraph [0026] - paragraph [0041] * * figures 1-4,7,9,10 * | 4-7,10 | |
| | ----- | | |
| X | DE 10 2021 003803 A1 (RENSBURG MARKUS [DE]) 26 January 2023 (2023-01-26) | 1 | |
| Y | * figures 1-23 * * paragraph [0021] - paragraph [0037] * | 2-9 | |
| | ----- | | |
| X | US 2017/016468 A1 (LIN JUNG-NAN [TW]) 19 January 2017 (2017-01-19) | 1 | |
| Y | * figures 2-7 * * paragraph [0024] - paragraph [0028] * | 2-9 | |
| | ----- | | |
| X | US 2009/169334 A1 (SU GUO-CAI [TW]) 2 July 2009 (2009-07-02) | 1 | |
| Y | * figures 2-9 * * paragraph [0018] - paragraph [0022] * | 2-10 | |
| | ----- | | TECHNICAL FIELDS SEARCHED (IPC) |
| X | DE 20 2016 102749 U1 (APOLO MEA BEFESTIGUNGSSYSTEME GMBH [DE]) 28 July 2016 (2016-07-28) | 1 | F16B |
| Y | * the whole document * | 2-9 | |
| | ----- | | |
| Y | EP 3 387 272 B1 (PGB ASIA LTD [CN]; PENNOIT LUC FERNAND EMILE [BE]) 15 January 2020 (2020-01-15) | 2 | |
| A | * the whole document * | 1,3 | |
| | ----- | | |
| Y | US 2007/286701 A1 (HSU KUO-TAI [TW]) 13 December 2007 (2007-12-13) | 2 | |
| A | * the whole document * | 1,3 | |
| | ----- | | |

The present search report has been drawn up for all claims

| Place of search | Date of completion of the search | Examiner |
|---|---|---|
| Munich | 23 January 2024 | Prieto Sanz, M |

EPO FORM 1503 03.82 (P04C01)

**EP 4 530 486 A1**

## ANNEX TO THE EUROPEAN SEARCH REPORT
## ON EUROPEAN PATENT APPLICATION NO.

EP 23 20 0673

23-01-2024

| Patent document cited in search report | | | Publication date | Patent family member(s) | | Publication date |
|---|---|---|---|---|---|---|
| JP 2006308079 | A | | 09-11-2006 | NONE | | |
| DE 102021003803 | A1 | | 26-01-2023 | NONE | | |
| US 2017016468 | A1 | | 19-01-2017 | NONE | | |
| US 2009169334 | A1 | | 02-07-2009 | NONE | | |
| DE 202016102749 | U1 | | 28-07-2016 | NONE | | |
| EP 3387272 | B1 | | 15-01-2020 | BE | 1023662 A1 | 09-06-2017 |
| | | | | DK | 3387272 T3 | 10-02-2020 |
| | | | | EP | 3387272 A1 | 17-10-2018 |
| | | | | ES | 2770109 T3 | 30-06-2020 |
| | | | | PL | 3387272 T3 | 15-06-2020 |
| | | | | TW | 201732164 A | 16-09-2017 |
| | | | | WO | 2017098337 A1 | 15-06-2017 |
| US 2007286701 | A1 | | 13-12-2007 | NONE | | |

EPO FORM P0459